# EUROPEAN PATENT SPECIFICATION

(11) **EP 2 402 401 B1**
(45) Date of publication and mention of the grant of the patent: **13.11.2013**
(21) Application number: 11169456.8
(22) Date of filing: 10.06.2011
(51) Int. Cl.: C09C 1/00

(54) **Magnetic multilayer pigment flake and coating composition**
Magnetische mehrschichtige Pigmentplättchen und Beschichtungszusammensetzung
Paillette de pigment multicouches magnétique et composition de revêtement

(30) Priority: 30.06.2010 US 828069
(43) Date of publication of application: 04.01.2012
(73) Proprietor: JDS Uniphase Corporation, Milpitas, CA 95035 (US)
(72) Inventor: Raksha, Vladimir P., Santa Rosa, CA California 95403 (US); Kohlmann, Paul T., Windsor, CA California 95492 (US); Delst, Cornelis Jan, Fairfax, CA California 94930 (US); Coombs, Paul G., Santa Rosa, CA California 95404 (US)
(74) Representative: Adam, Holger

(56) References cited:
- EP-A2- 1 918 331
- WO-A1-00/34395

## Description

### TECHNICAL FIELD OF THE INVENTION

The present invention relates to multilayer pigment flakes and to coating compositions incorporating such pigment flakes. In particular, the present invention relates to magnetic multilayer pigment flakes and to magnetic coating compositions.

### BACKGROUND OF THE INVENTION

Chromium-containing materials are widely used in coating compositions because of their advantageous optical-absorption and corrosion-inhibiting properties. In many coating compositions, such as interference coating compositions, layers of chromium-containing materials are used as absorbing layers in multilayer pigment flakes.

For example, as disclosed in U.S. Patent No. 3,858,977 to Baird, et al., issued on January 7, 1975, in U.S. Patent No. 5,059,245 to Phillips, et al., issued on October 22, 1991, in U.S. Patent No. 5,571,624 to Phillips, et al., issued on November 5, 1996, in U.S. Patent No. 6,132,504 to Kuntz, et al., issued on October 17, 2000, and in U.S. Patent No. 6,156,115 to Pfaff, et al., issued on December 5, 2000, layers of chromium metal may be used as absorbing layers. As disclosed in U.S. Patent No. 4,978,394 to Ostertag, et al., issued on December 18, 1990, and in U.S. Patent No. 5,364,467 to Schmid, et al., issued on November 15, 1994, layers of chromium(III) oxide (Cr₂O₃) may be used as absorbing layers. As disclosed in U.S. Patent No. 5,424,119 to Phillips, et al., issued on June 13, 1995, in U.S. Patent No. 6,235,105 to Hubbard, et al., issued on May 22, 2001, in U.S. Patent No. 6,524,381 to Phillips, et al., issued on February 25, 2003, in U.S. Patent No. 6,648,957 to Andes, et al., issued on November 18, 2003, in U.S. Patent No. 6,759,097 to Phillips, et al., issued on July 6, 2004, in U.S. Patent No. 6,818,299 to Phillips, et al., issued on November 16, 2004, and in U.S. Patent No. 7,169,472 to Raksha, et al., issued on January 30, 2007, layers of chromium-containing alloys, such as Hastelloys, Inconels, stainless steels, and nickel-chromium alloys, may be used as absorbing layers.

Unfortunately, many of the chromium-containing materials in the absorbing layers of prior-art coating compositions are harmful to human health. Chromium metal and chromium(III) oxide, for example, each cause irritation to the skin, eyes, respiratory tract, and gastrointestinal tract. Moreover, these materials may be oxidized to form chromium(VI) species, which are, generally, toxic and carcinogenic. Furthermore, the chromium-containing alloys used in the absorbing layers of prior-art coating compositions, typically, also contain nickel, which is toxic and carcinogenic. Therefore, many prior-art coating compositions based on chromium-containing materials pose potential health and environmental hazards.

### SUMMARY OF THE INVENTION

An object of the present invention is to overcome the shortcomings of the prior art by providing a magnetic multilayer pigment flake and a magnetic coating composition that are relatively safe for human health and the environment.

Accordingly, the present invention relates to a magnetic multilayer pigment flake comprising a magnetic layer of a magnetic alloy having a substantially nickel-free composition including about 40 wt% to about 90 wt% iron, about 10 wt% to about 50 wt% chromium, and about 0 wt% to about 30 wt% aluminium.

Another aspect of the present invention relates to a magnetic coating composition comprising a binder medium, and one or more magnetic multilayer pigment flakes disposed in the binder medium, wherein the one or more pigment flakes each comprise a magnetic layer of a magnetic alloy having a substantially nickel-free composition including about 40 wt% to about 90 wt% iron, about 10 wt% to about 50 wt% chromium, and about 0 wt% to about 30 wt% aluminium.

Preferably, the composition of the magnetic alloy is selected to minimize chromium(VI) release.

### BRIEF DESCRIPTION OF THE DRAWINGS

The present invention will be described in greater detail with reference to the accompanying drawings, which represent exemplary embodiments thereof, wherein:

FIG. 1A is a schematic illustration of a cross-section of a first preferred embodiment of a magnetic multilayer pigment flake;

FIG. 1B is a plot of the angle-dependent colour travel of a magnetic coating composition comprising a plurality of the pigment flakes of FIG. 1A having the following layer structure: Fe-Cr, semi-transparent / MgF₂, 370 nm / Al, opaque / MgF₂, 370 nm / Fe-Cr, semi-transparent;

FIG. 1C is a plot of the angle-dependent colour travel of a magnetic coating composition comprising a plurality of the pigment flakes of FIG. 1A having the following layer structure: Fe-Cr-Al, semi-transparent / MgF₂, 370 nm / Fe-Cr-Al, opaque / MgF₂, 370 nm / Fe-Cr-Al, semi-transparent;

FIG. 2A is a schematic illustration of a cross-section of a second preferred embodiment of a magnetic multilayer pigment flake having a first layer-thickness profile;

FIG. 2B is a schematic illustration of a cross-section of a second preferred embodiment of a magnetic multilayer pigment flake having a second layer-thickness profile;

FIG. 3A is a schematic illustration of a preferred embodiment of a coating composition being exposed to microwave radiation; and

FIG. 3B is a schematic illustration of the coating composition illustrated in FIG. 3A being exposed to a magnetic field.

### DETAILED DESCRIPTION OF THE INVENTION

The present invention provides a magnetic multilayer pigment flake and a magnetic coating composition incorporating such pigment flakes. The pigment flake and, consequently, the coating composition substantially preclude the release of potentially harmful nickel and chromium(VI), while providing advantageous magnetic, optical, and corrosion-inhibiting properties.

The pigment flake includes a plurality of thin-film layers of various materials. Generally, the pigment flake has an aspect ratio of at least 2:1 and an average particle size of about 2 µm to about 20 µm.

In particular, the pigment flake includes one or more magnetic layers of a magnetic alloy, i.e. a ferro- or ferrimagnetic alloy, enabling the pigment flake to be aligned with a magnetic field. The magnetic alloy has a nickel-free composition including iron and chromium. Optionally, the composition of the magnetic alloy may also include other metals, such as aluminium, minor constituents, and/or impurities.

In the magnetic alloy, the chromium atoms are bonded by metallic bonds, which involve the sharing of electrons. Thus, chromium is present in the magnetic alloy as chromium(0). If the magnetic alloy is subject to corrosion, chromium is mainly released as chromium(III), rather than potentially harmful chromium(VI). Moreover, a chromium(III)-containing oxide may be formed, which passivates the surface of the magnetic alloy, inhibiting further corrosion.

The inventors have found that a composition of the magnetic alloy including about 40 wt% to about 90 wt% iron, about 10 wt% to about 50 wt% chromium, and about 0 wt % to about 30 wt% aluminium minimizes the undesirable release of chromium(VI), but retains desirable magnetic, optical, and corrosion-inhibiting properties. Preferably, the pigment flake releases substantially no chromium(VI).

In a preferred embodiment, which provides advantageous optical-absorption properties, the magnetic alloy is an iron-chromium alloy having a composition consisting of about 10 wt% to about 50 wt% chromium and a balance of iron. In another preferred embodiment, which provides advantageous optical-reflection properties, the magnetic alloy is an iron-chromium-aluminium alloy having a composition consisting of about 20 wt% to about 30 wt% chromium, about 20 wt% to about 30 wt% aluminium, and a balance of iron.

The pigment flake, typically, includes a plurality of magnetic layers of the magnetic alloy, in addition to a plurality of dielectric layers. Optionally, the pigment flake may also include layers of other types.

The magnetic layers of the magnetic alloy, typically, serve as absorbing layers for absorbing light and/or as reflecting layers for reflecting light. The magnetic layers may be formed of the same or different magnetic alloys and may have the same or different physical thicknesses. Generally, the magnetic layers each have a physical thickness of about 3 nm to about 1000 nm. In instances where the magnetic layers serve as absorbing layers, the magnetic layers are semi-transparent, each, typically, having a physical thickness of about 3 nm to about 50 nm. Preferably, such semi-transparent absorbing magnetic layers each have a physical thickness of about 5 nm to about 15 nm. In instances where the magnetic layers serve as reflecting layers, the magnetic layers are opaque, each, typically, having a physical thickness of about 20 nm to about 1000 nm. Preferably, such opaque reflecting magnetic layers each have a physical thickness of about 50 nm to about 100 nm.

In some instances, an opaque layer of a reflective material other than the magnetic alloy may serve as a reflecting layer for reflecting light. Suitable reflective materials include tin, aluminium, copper, silver, gold, palladium, platinum, titanium, and compounds or alloys thereof. Such an opaque reflecting layer is, preferably, formed of aluminium. Typically, such an opaque reflecting layer has a physical thickness within the same ranges as the opaque reflecting magnetic layers.

The dielectric layers, typically, serve as transparent spacer layers, and provide the pigment flake with durability and rigidity. The dielectric layers may be formed of any transparent dielectric material having a low refractive index, i.e. a refractive index of less than about 1.65, or a high refractive index, i.e. a refractive index of greater than about 1.65. Suitable dielectric materials having a low refractive index include silicon dioxide (SiO₂), aluminium oxide (Al₂O₃), and metal fluorides, such as magnesium fluoride (MgF₂). Suitable dielectric materials having a high refractive index include silicon monoxide (SiO) and zinc sulphide (ZnS). Preferably, the dielectric layers are formed of magnesium fluoride.

The dielectric layers may be formed of the same or different dielectric materials and may have the same or different physical thicknesses. Generally, the dielectric layers each have a physical thickness of about 100 nm to about 5000 nm. The physical thickness is selected to correspond with an optical thickness required by a layer structure of the pigment flake for providing a desired optical effect.

The pigment flake may have a variety of layer structures, having various compositional and layer-thickness profiles, for providing a variety of optical effects. Preferably, the pigment flake has an interference layer structure for providing a colour-shifting effect through the interference of light, such that the pigment flake changes colour with viewing angle or angle of incident light.

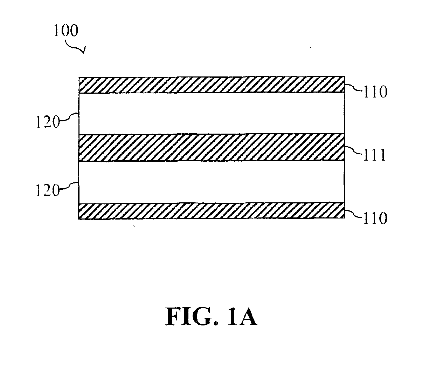

With reference to FIG. 1A, a first preferred embodiment of the pigment flake 100 has a symmetrical interference layer structure including five layers: two semi-transparent absorbing magnetic layers 110, two transparent dielectric layers 120, and one opaque reflecting layer 111, which may be non-magnetic or magnetic. A first transparent dielectric layer 120 overlies a first semi-transparent absorbing magnetic layer 110, a central opaque reflecting layer 111 overlies the first transparent dielectric layer 120, a second transparent dielectric layer 120 overlies the central opaque reflecting layer 111, and a second semi-transparent absorbing magnetic layer 110 overlies the second transparent dielectric layer 120.

The first and second semi-transparent absorbing magnetic layers 110 are formed of the magnetic alloy, and the first and second transparent dielectric layers 120 are formed of a dielectric material, as described heretofore.

In some embodiments, the central opaque reflecting layer 111 is formed of a reflective material other than the magnetic alloy, as described heretofore. To illustrate such an embodiment, a layer stack was fabricated having the following layer structure: Fe-Cr, semi-transparent / MgF₂, 370 nm / Al, opaque / MgF₂, 370 nm / Fe-Cr, semi-transparent. First and second semi-transparent absorbing magnetic layers 110 of an iron-chromium alloy, first and second transparent dielectric layers 120 of magnesium fluoride, and a central opaque reflecting layer 111 of aluminium were deposited by evaporation in vacuum onto a polyester substrate. The iron-chromium alloy had a composition consisting of about 14 wt% chromium and a balance of iron.

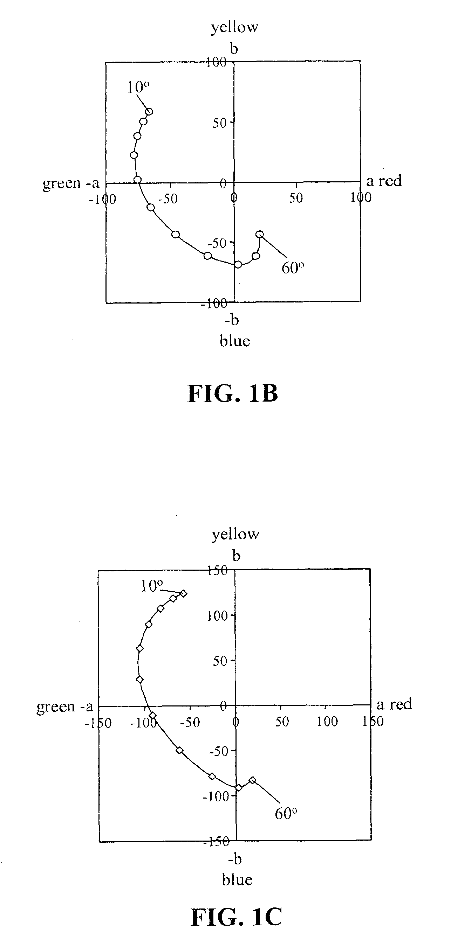

The layer stack was stripped from the substrate and ground to form a plurality of pigment flakes 100 having an average particle size of about 20 µm. The plurality of pigment flakes 100 were combined with a binder medium to form a coating composition, and the coating composition was printed onto a paper substrate and dried. The colour-shifting properties of the printed coating composition were then analysed with a goniospectrophotometer. The angle-dependent colour travel of the printed coating composition with a change of viewing angle from 10° to 60° is plotted in FIG. 1B.

In other embodiments, the central opaque reflecting layer 111 is formed of the magnetic alloy, preferably, embodied as an iron-chromium-aluminium alloy, such that the magnetic layers 110 and 111 alternate with the dielectric layers 120. To illustrate such an embodiment, a layer stack was fabricated having the following layer structure: Fe-Cr-Al, semi-transparent / MgF₂, 370 nm / Fe-Cr-Al, opaque / MgF₂, 370 nm / Fe-Cr-Al, semi-transparent. First and second semi-transparent absorbing magnetic layers 110 of an iron-chromium-aluminium alloy, first and second transparent dielectric layers 120 of magnesium fluoride, and a central opaque reflecting magnetic layer 111 of the iron-chromium-aluminium alloy were deposited by evaporation in vacuum onto a polyester substrate to form the layer stack. The iron-chromium-aluminium alloy had a composition consisting of about 24 wt% chromium, about 27 wt% aluminium, and a balance of iron.

The layer stack was stripped from the substrate and ground to form a plurality of pigment flakes 100 having an average particle size of about 20 µm. The plurality of pigment flakes 100 were combined with a binder medium to form a coating composition, and the coating composition was printed onto a paper substrate and dried. The colour-shifting properties of the printed coating composition were then analysed with a goniospectrophotometer. The angle-dependent colour travel of the printed coating composition with a change of viewing angle from 10° to 60° is plotted in FIG. 1C.

Advantageously, embodiments of the pigment flake that include a plurality of magnetic layers of the magnetic alloy in alternation with a plurality of dielectric layers absorb microwave radiation particularly well, allowing the pigment flake to be heated with microwave radiation. In such embodiments, the magnetic alloy serves three different functions: enabling microwave absorption by the pigment flake, enabling optical absorption by the pigment flake, and enabling magnetic alignment of the pigment flake.

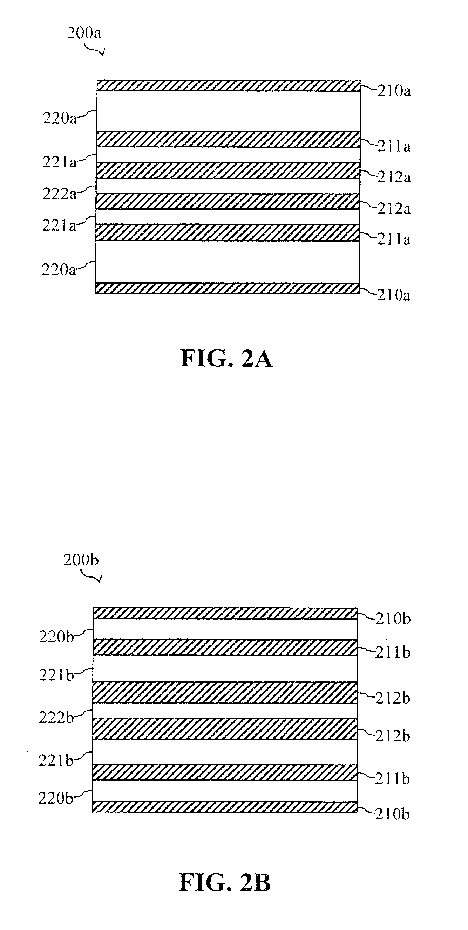

With reference to FIGS. 2A and 2B, a second preferred embodiment of the pigment flake 200 has a symmetrical interference structure including eleven layers: two semi-transparent absorbing magnetic layers 210, five transparent dielectric layers 220, 221, and 222, and four opaque reflecting magnetic layers 211 and 212. A first transparent dielectric layer 220 overlies a first semi-transparent magnetic layer 210, a first opaque reflecting magnetic layer 211 overlies the first transparent dielectric layer 220, a second transparent dielectric layer 221 overlies the first opaque reflecting magnetic layer 211, a second opaque reflecting magnetic layer 212 overlies the second transparent dielectric layer 221, a third transparent dielectric layer 222 overlies the second opaque reflecting magnetic layer 212, a third opaque reflecting magnetic layer 212 overlies the third transparent dielectric layer 222, a fourth transparent dielectric layer 221 overlies the third opaque reflecting magnetic layer 212, a fourth opaque reflecting magnetic layer 211 overlies the fourth transparent dielectric layer 221, a fifth transparent dielectric layer 220 overlies the fourth opaque reflecting magnetic layer 211, and a second semi-transparent absorbing magnetic layer 210 overlies the fifth transparent dielectric layer 220, such that the magnetic layers 210, 211, and 212 alternate with the dielectric layers 220, 221, and 222.

The first and second semi-transparent absorbing magnetic layers 210, and the first, second, third, and fourth opaque reflecting magnetic layers 211 and 212 are formed of the magnetic alloy. The first, second, third, fourth, and fifth transparent dielectric layers 220, 221, and 222 are formed of a dielectric material, as described heretofore.

The pigment flake 200 may have various layer-thickness profiles selected to optimize resonant microwave absorption over a large bandwidth. With particular reference to FIG. 2A, according to a first layer-thickness profile of the pigment flake 200a, the first, second, third, and fourth opaque reflecting magnetic layers 211a and 212a have the same physical thickness, which is larger than that of the first and second semi-transparent absorbing magnetic layers 210a. The second, third, and fourth transparent dielectric layers 221a and 222a have the same physical thickness, which is smaller than that of the first and fifth transparent dielectric layers 220a.

With particular reference to FIG. 2B, according to a second layer-thickness profile of the pigment flake 200b, the physical thickness of the second and third opaque reflecting magnetic layers 212b is larger than that of the first and fourth opaque reflecting magnetic layers 211b, which is larger than that of the first and second semi-transparent absorbing magnetic layers 210b. The physical thickness of the third transparent dielectric layer 222b is smaller than that of the first and fifth transparent dielectric layers 220b, which is smaller than that of the second and third transparent dielectric layers 221b. Advantageously, such a layer-thickness profile provides a particularly large bandwidth of microwave absorption.

The pigment flake of the present invention can be formed by various fabrication methods, as disclosed in U.S. Patent No. 5,059,245, in U.S. Patent No. 5,571,624, in U.S. Patent No. 6,524,381, and in U.S. Patent No. 6,818,299, for example. Generally, some or all of the component layers are sequentially deposited on a substrate by using a conventional deposition technique, such as a physical vapour deposition (PVD), chemical vapour deposition (CVD), or electrolytic deposition, to form a layer stack. The layer stack is subsequently stripped from the substrate and ground to form a plurality of pigment flakes or preflakes. If preflakes are formed, the remaining component layers are then sequentially deposited on the preflakes to form a plurality of pigment flakes.

The plurality of pigment flakes may be combined with a binder medium to produce the coating composition of the present invention. Typically, the binder medium includes a resin that can be cured, for example, by evaporation, by heating, or by exposure to ultraviolet (UV) radiation. Suitable resins include alkyd resins, polyester resins, acrylic resins, polyurethane resins, vinyl resins, epoxy resins, styrene resins, and melamine resins. Optionally, the binder medium may include a solvent, such as an organic solvent or water, a cure retarder, such as clove oil, or other additives.

The coating composition may be used as a paint or an ink and applied to various objects, such as currency and security documents, product packagings, fabrics, motorized vehicles, sporting goods, electronic housings, household appliances, architectural structures, and floorings. Preferably, the coating composition is an interference coating composition providing a colour-shifting effect through the interference of light.

Being relatively safe for human health and the environment, the coating composition is well-suited for use in applications where chemical safety is a concern and for use under conditions where chemical release is likely to occur.

Being magnetic, the coating composition is also well-suited for use in printing optical-effect images, such as three-dimensional, illusionary, and/or kinematic images, by aligning the magnetic pigment flakes within the coating composition with a magnetic field. A variety of optical-effect images for decorative and security applications can be produced by various methods, as disclosed in U.S. Patent No. 6,759,097, in U.S. Patent No. 7,047,883 to Raksha, et al., issued on May 23, 2006, in U.S. Patent Application Publication No. 2006/0081151 to Raksha, et al., published on April 20, 2006, and in U.S. Patent Application Publication No. 2007/0268349 to Kurman, published on November 22, 2007, for example.

Generally, the coating composition is printed on a substrate by a conventional printing technique, such as gravure, stamping, intaglio, flexographic, silk-screen, jet, or lithographic printing. While still fluid or after being re-fluidized, the coating composition is exposed to a magnetic field, which aligns the magnetic pigment flakes within the coating in a desired pattern. The binder medium within the coating composition is then cured, for example, by evaporation, by heating, or by exposure to UV radiation, fixing the alignment of the pigment flakes in the desired pattern to form the optical-effect image.

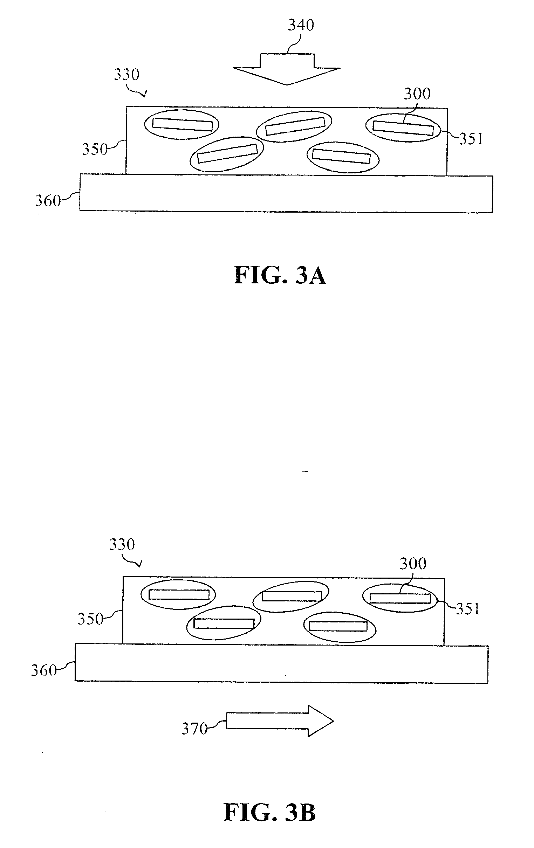

With reference to FIGS. 3A and 3B, a preferred embodiment of the coating composition 330, which is well-suited for use as an intaglio ink, includes pigment flakes 300 that absorb microwave radiation 340 disposed in a high-viscosity binder medium 350. The coating composition 330 is printed on a substrate 360. With particular reference to FIG. 3A, when the coating composition 330 is exposed to microwave radiation 340, the pigment flakes 300 absorb the microwave radiation 340, generating heat. The generated heat reduces the viscosity of the binder medium 350 in microcapsules 351 surrounding the pigment flakes 300. Advantageously, it is only necessary to apply enough microwave radiation 340 to the coating composition 330 to reduce the viscosity within the microcapsules 351, rather than within the binder medium 350 as a whole.

With particular reference to FIG. 3B, when the coating composition 330 is soon afterward exposed to a magnetic field 370, the pigment flakes 300, which are free to move within the low-viscosity microcapsules 351, align themselves with the magnetic field 370. The coating composition 330 is then removed from the magnetic field 370 and is cured by evaporation, fixing the alignment of the pigment flakes 300. Although the pigment flakes 300 are illustrated in FIG. 3B as being aligned parallel to the substrate 360, the pigment flakes 300 may be aligned in numerous other patterns by varying the direction and intensity of the magnetic field 370.

## Claims

1. A magnetic multilayer pigment flake (100, 200, 300) comprising one or more magnetic layers (110, 111, 210, 211, 212) of a magnetic alloy, **characterised in that** the magnetic alloy has a substantially nickel-free composition including about 40 wt% to about 90 wt% iron, about 10 wt% to about 50 wt% chromium, and about 0 wt% to about 30 wt% aluminium.

2. The pigment flake (100, 200, 300) of claim 1, wherein the magnetic alloy is an iron-chromium alloy, and wherein the composition consists of about 10 wt% to about 50 wt% chromium, and a balance of iron.

3. The pigment flake (100, 200, 300) of claim 1, wherein the magnetic alloy is an iron-chromium-aluminium alloy, and wherein the composition consists of about 20 wt% to about 30 wt% chromium, about 20 wt% to about 30 wt% aluminium, and a balance of iron.

4. The pigment flake (100, 200, 300) of any one of claims 1 to 3, further comprising a plurality of dielectric layers (120, 220, 221, 222), wherein the one or more magnetic layers (110, 111, 210, 211, 212) consist of a plurality of magnetic layers (110, 111, 210, 211, 212).

5. The pigment flake (100, 200, 300) of claim 4, wherein the pigment flake (100, 200, 300) has an interference layer structure, such that the pigment flake (100, 200, 300) changes colour with viewing angle or angle of incident light.

6. The pigment flake of claim 4 or 5 (100, 300), further comprising a central opaque reflecting layer (111) of aluminium; wherein the plurality of magnetic layers (110) include first and second semi-transparent absorbing magnetic layers (110); wherein the plurality of dielectric layers (120) include first and second transparent dielectric layers (120); wherein the first transparent dielectric layer (120) overlies the first semi-transparent magnetic layer (110); wherein the central opaque reflecting layer (111) overlies the first transparent dielectric layer (120); wherein the second transparent dielectric layer (120) overlies the central opaque reflecting layer (111); and wherein the second semi-transparent absorbing magnetic layer (110) overlies the second transparent dielectric layer (120).

7. The pigment flake (100, 200, 300) of claim 4 or 5, wherein the plurality of magnetic layers (110, 111, 210, 211, 212) alternate with the plurality of dielectric layers (120, 220, 221, 222), and wherein the pigment flake (100, 200, 300) absorbs microwave radiation (340), such that the pigment flake (100, 200, 300) can be heated with microwave radiation (340).

8. The pigment flake (100, 300) of any one of claims 4, 5, and 7, wherein the plurality of magnetic layers (110, 111) include first and second semi-transparent absorbing magnetic layers (110), and a central opaque reflecting magnetic layer (111); wherein the plurality of dielectric layers (120) include first and second transparent dielectric layers (120); wherein the first transparent dielectric layer (120) overlies the first semi-transparent magnetic layer (110); wherein the central opaque reflecting magnetic layer (111) overlies the first transparent dielectric layer (120); wherein the second transparent dielectric layer (120) overlies the central opaque reflecting magnetic layer (111); and wherein the second semi-transparent absorbing magnetic layer (110) overlies the second transparent dielectric layer (120).

9. The pigment flake (200, 300) of any one of claims 4, 5, and 7, wherein the plurality of magnetic layers (210, 211, 212) include first and second semi-transparent absorbing magnetic layers (210), and first, second, third, and fourth opaque reflecting magnetic layers (211, 212); wherein the plurality of dielectric layers (220, 221, 222) include first, second, third, fourth, and fifth transparent dielectric layers (220, 221, 222); wherein the first transparent dielectric layer (220) overlies the first semi-transparent magnetic layer (210); wherein the first opaque reflecting magnetic layer (211) overlies the first transparent dielectric layer (220); wherein the second transparent dielectric layer (221) overlies the first opaque reflecting magnetic layer (211); wherein the second opaque reflecting magnetic layer (212) overlies the second transparent dielectric layer (221); wherein the third transparent dielectric layer (222) overlies the second opaque reflecting magnetic layer (212); wherein the third opaque reflecting magnetic layer (212) overlies the third transparent dielectric layer (222); wherein the fourth transparent dielectric layer (221) overlies the third opaque reflecting magnetic layer (212); wherein the fourth opaque reflecting magnetic layer (211) overlies the fourth transparent dielectric layer (221); wherein the fifth transparent dielectric layer (220) overlies the fourth opaque reflecting magnetic layer (211); and wherein the second semi-transparent absorbing magnetic layer (210) overlies the fifth transparent dielectric layer (220).

10. The pigment flake (200b, 300) of claim 9, wherein the second and third opaque reflecting magnetic layers (212b) have a physical thickness that is larger than that of the first and fourth opaque reflecting magnetic layers (211b); wherein the first and fourth opaque reflecting magnetic layers (211 b) have a physical thickness that is larger than that of the first and second semi-transparent absorbing magnetic layers (210b); wherein the third transparent dielectric layer (222b) has a physical thickness that is smaller than that of the first and fifth transparent dielectric layers (220b); and wherein the first and fifth transparent dielectric layers (220b) have a physical thickness that is smaller than that of the second and fourth transparent dielectric layers (221b).

11. A magnetic coating composition (330) comprising a binder medium (350), and the pigment flake (100, 200, 300) of any one of claims 1 to 10 disposed in the binder medium (350).

12. The coating composition (330) of claim 11, wherein the binder medium (350) is a high-viscosity binder medium (350), and wherein the coating composition (330) is an intaglio ink.

## Patentansprüche

1. Magnetisches Mehrschichtpigmentplättchen (100, 200, 300), umfassend eine oder mehrere magnetische Schicht(en) (110, 111, 210, 211, 212) einer magnetischen Legierung, **dadurch gekennzeichnet, dass** die magnetische Legierung eine im Wesentlichen nickelfreie Zusammensetzung, enthaltend etwa 40 Gew.% bis etwa 90 Gew.% Eisen, etwa 10 Gew.% bis etwa 50 Gew.% Chrom und etwa 0 Gew.% bis etwa 30 Gew.% Aluminium, aufweist.

2. Pigmentplättchen (100, 200, 300) nach Anspruch 1, wobei die magnetische Legierung eine Eisen-Chrom-Legierung ist und wobei die Zusammensetzung aus etwa 10 Gew.% bis etwa 50 Gew.% Chrom und zum Rest Eisen besteht.

3. Pigmentplättchen (100, 200, 300) nach Anspruch 1, wobei die magnetische Legierung eine Eisen-Chrom-AluminiumLegierung ist und wobei die Zusammensetzung aus etwa 20 Gew.% bis etwa 30 Gew.% Chrom, etwa 20 Gew.% bis etwa 30 Gew.% Aluminium und zum Rest Eisen besteht.

4. Pigmentplättchen (100, 200, 300) nach einem der Ansprüche 1 bis 3, des weiteren umfassend eine Mehrzahl dielektrischer Schichten (120, 220, 221, 222), wobei die eine oder mehreren magnetische(n) Schicht(en) (110, 111, 210, 211, 212) aus einer Mehrzahl von magnetischen Schichten (110, 111, 210, 211, 212) besteht (bestehen).

5. Pigmentplättchen (100, 200, 300) nach Anspruch 4, wobei das Pigmentplättchen (100, 200, 300) eine Interferenzschichtstruktur aufweist, so dass das Pigmentplättchen (100, 200, 300) in Abhängigkeit vom Betrachtungswinkel oder dem Winkel des einfallenden Lichts die Farbe verändert.

6. Pigmentplättchen nach Anspruch 4 oder 5 (100, 300), des weiteren umfassend eine zentrale opake Reflektionsschicht (111) aus Aluminium, wobei die Mehrzahl der magnetischen Schichten (110) erste und zweite halbtransparente absorbierende magnetische Schichten (110) einschließt; wobei die Mehrzahl der dielektrischen Schichten (120) erste und zweite transparente dielektrische Schichten (120) einschließt; wobei die erste transparente dielektrische Schicht (120) über der ersten halbtransparenten magnetischen Schicht (110) liegt; wobei die zentrale opake Reflektionsschicht (111) über der ersten transparenten dielektrischen Schicht (120) liegt; wobei die zweite transparente dielektrische Schicht (120) über der zentralen opaken Reflektionsschicht (111) liegt; und wobei die zweite halbtransparente absorbierende magnetische Schicht (110) über der zweiten transparenten dielektrischen Schicht (120) liegt.

7. Pigmentplättchen (100, 200, 300) nach Anspruch 4 oder 5, wobei die Mehrzahl der magnetischen Schichten (110, 111, 210, 211, 212) mit der Mehrzahl der dielektrischen Schichten (120, 220, 221, 222) abwechselt und wobei das Pigmentplättchen (100, 200, 300) Mikrowellenstrahlung (340) absorbiert, so dass das Pigmentplättchen (100, 200, 300) mit Mikrowellenstrahlung (340) erhitzt werden kann.

8. Pigmentplättchen (100, 300) nach einem der Ansprüche 4, 5 und 7, wobei die Mehrzahl der magnetischen Schichten (110, 111) erste und zweite halbtransparente absorbierende magnetische Schichten (110) und eine zentrale opake reflektierende magnetische Schicht (111) einschließt; wobei die Mehrzahl der dielektrischen Schichten (120) erste und zweite transparente dielektrische Schichten (120) einschließt; wobei die erste transparente dielektrische Schicht (120) über der ersten halbtransparenten magnetischen Schicht (110) liegt; wobei die zentrale opake reflektierende magnetische Schicht (111) über der ersten transparenten dielektrischen Schicht (120) liegt; wobei die zweite transparente dielektrische Schicht (120) über der zentralen opaken reflektierenden magnetischen Schicht (111) liegt und wobei die zweite halbtransparente absorbierende magnetische Schicht (110) über der zweiten transparenten dielektrischen Schicht (120) liegt.

9. Pigmentplättchen (200, 300) nach einem der Ansprüche 4, 5 und 7, wobei die Mehrzahl der magnetischen Schichten (210, 211, 212) erste und zweite halbtransparente absorbierende magnetische Schichten (210) und erste, zweite, dritte und vierte opake reflektierende magnetische Schichten (211, 212) einschließt; wobei die Mehrzahl der dielektrischen Schichten (220, 221, 222) erste, zweite, dritte, vierte und fünfte transparente dielektrische Schichten (220, 221, 222) einschließt; wobei die erste transparente dielektrische Schicht (220) über der ersten halbtransparenten magnetischen Schicht (210) liegt; wobei die erste opake reflektierende magnetische Schicht (211) über der ersten transparenten dielektrischen Schicht (220) liegt; wobei die zweite transparente dielektrische Schicht (221) über der ersten opaken reflektierenden magnetischen Schicht (211) liegt; wobei die zweite opake reflektierende magnetische Schicht (212) über der zweiten transparenten dielektrischen Schicht (221) liegt; wobei die dritte transparente dielektrische Schicht (222) über der zweiten opaken reflektierenden magnetischen Schicht (212) liegt; wobei die dritte opake reflektierende magnetische Schicht (212) über der dritten transparenten dielektrischen Schicht (222) liegt; wobei die vierte transparente dielektrische Schicht (221) über der dritten opaken reflektierenden magnetischen Schicht (212) liegt; wobei die vierte opake reflektierende magnetische Schicht (211) über der vierten transparenten dielektrischen Schicht (221) liegt; wobei die fünfte transparente dielektrische Schicht (220) über der vierten opaken reflektierenden magnetischen Schicht (211) liegt und wobei die zweite halbtransparente absorbierende magnetische Schicht (210) über der fünften transparenten dielektrischen Schicht (220) liegt.

10. Pigmentplättchen (200b, 300) nach Anspruch 9, wobei die zweite und dritte opake reflektierende magnetische Schicht (212b) eine physikalische Dicke aufweisen, die größer ist als diejenige der ersten und vierten opaken reflektierenden magnetischen Schicht (211b); wobei die erste und vierte opake reflektierende magnetische Schicht (211b) eine physikalische Dicke aufweisen die größer ist als diejenige der ersten und zweiten halbtransparenten absorbierenden magnetischen Schicht (210b); wobei die dritte transparente dielektrische Schicht (222b) eine physikalische Dicke aufweist, die kleiner ist als diejenige der ersten und fünften transparenten dielektrischen Schicht (220b) und wobei die erste und fünfte transparente dielektrische Schicht (220b) eine physikalische Dicke aufweisen, die kleiner ist als diejenige der zweiten und vierten transparenten dielektrischen Schicht (221b).

11. Magnetische Beschichtungszusammensetzung (330), umfassend ein Bindemittelmedium (350) und das Pigmentplättchen (100, 200, 300) nach einem der Ansprüche 1 bis 10, das in dem Bindemittelmedium (350) angeordnet ist.

12. Beschichtungszusammensetzung (330) nach Anspruch 11, wobei das Bindemittelmedium (350) ein hochviskoses Bindemittelmedium (350) ist und wobei die Beschichtungszusammensetzung (330) eine Tiefdruck-Druckfarbe ist.

## Revendications

1. Paillette de pigment multicouche magnétique (100, 200, 300) comprenant une ou plusieurs couches magnétiques (110, 111, 210, 211, 212) d'un alliage magnétique, **caractérisée en ce que** l'alliage magnétique a une composition essentiellement dépourvue de nickel comprenant d'environ 40 % en poids à environ 90 % en poids de fer, d'environ 10 % en poids à environ 50 % en poids de chrome et d'environ 0 % en poids à environ 30 % en poids d'aluminium.

2. Paillette de pigment (100, 200, 300) selon la revendication 1, dans laquelle l'alliage magnétique est un alliage de fer-chrome, et dans laquelle la composition est constituée d'environ 10 % en poids à environ 50 % en poids de chrome et le complément de fer.

3. Paillette de pigment (100, 200, 300) selon la revendication 1, dans laquelle l'alliage magnétique est un alliage de fer-chrome-aluminium, et dans laquelle la composition est constituée d'environ 20 % en poids à environ 30 % en poids de chrome, d'environ 20 % en poids à environ 30 % en poids d'aluminium et le complément de fer.

4. Paillette de pigment (100, 200, 300) selon l'une quelconque des revendications 1 à 3, comprenant en outre une pluralité de couches diélectriques (120, 220, 221, 222), dans laquelle les une ou plusieurs couches magnétiques (110, 111, 210, 211, 212) sont constituées d'une pluralité de couches magnétiques (110, 111, 210, 211, 212).

5. Paillette de pigment (100, 200, 300) selon la revendication 4, dans laquelle la paillette de pigment (100, 200, 300) a une structure de couche d'interférence, de sorte que la paillette de pigment (100, 200, 300) change de couleur selon l'angle de vue ou selon l'angle de la lumière incidente.

6. Paillette de pigment (100, 300) selon la revendication 4 ou 5, comprenant en outre une couche de réflexion centrale opaque (111) d'aluminium ; dans laquelle la pluralité de couches magnétiques (110) comprend une première et une seconde couches magnétiques semi-transparentes absorbantes (110) ; dans laquelle la pluralité de couches diélectriques (120) comprend une première et une seconde couches diélectriques transparentes (120) ; dans laquelle la première couche diélectrique transparente (120) recouvre la première couche magnétique semi-transparente (110) ; dans laquelle la couche de réflexion centrale opaque (111) recouvre la première couche diélectrique transparente (120) ; dans laquelle la seconde couche diélectrique transparente (120) recouvre la couche de réflexion centrale opaque (111) ; et dans laquelle la seconde couche magnétique semi-transparente absorbante (110) recouvre la seconde couche diélectrique transparente (120).

7. Paillette de pigment (100, 200, 300) selon la revendication 4 ou 5, dans laquelle la pluralité de couches magnétiques (110, 111, 210, 211, 212) alterne avec la pluralité de couches diélectriques (120, 220, 221, 222), et dans laquelle la paillette de pigment (100, 200, 300) absorbe un rayonnement micro-onde (340), de sorte que la paillette de pigment (100, 200, 300) peut être chauffée avec un rayonnement micro-onde (340).

8. Paillette de pigment (100, 300) selon l'une quelconque des revendications 4, 5 et 7, dans laquelle la pluralité de couches magnétiques (110, 111) comprend une première et une seconde couches magnétiques semi-transparentes absorbantes (110) et une couche magnétique de réflexion centrale opaque (111), dans laquelle la pluralité de couches diélectriques (120) comprend une première et une seconde couches diélectriques transparentes (120) ; dans laquelle la première couche diélectrique transparente (120) recouvre la première couche magnétique semi-transparente (110) ; dans laquelle la couche magnétique de réflexion centrale opaque (111) recouvre la première couche diélectrique transparente (120) ; dans laquelle la seconde couche diélectrique transparente (120) recouvre la couche magnétique de réflexion centrale opaque (111) ; et dans laquelle la seconde couche magnétique semi-transparente absorbante (110) recouvre la seconde couche diélectrique transparente (120).

9. Paillette de pigment (200, 300) selon l'une quelconque des revendications 4, 5 et 7, dans laquelle la pluralité de couches magnétiques (210, 211, 212) comprend une première et une seconde couches magnétiques semi-transparentes absorbantes (210) et une première, une deuxième, une troisième et une quatrième couches magnétiques de réflexion opaques (211, 212) ; dans laquelle la pluralité de couches diélectriques (220, 221, 222) comprend une première, une deuxième, une troisième, une quatrième et une cinquième couches diélectriques transparentes (220, 221, 222) ; dans laquelle la première couche diélectrique transparente (220) recouvre la première couche magnétique semi-transparente (210) ; dans laquelle la première couche magnétique de réflexion opaque (211) recouvre la première couche diélectrique transparente (220) ; dans laquelle la deuxième couche diélectrique transparente (221) recouvre la première couche magnétique de réflexion opaque (211) ; dans laquelle la deuxième couche magnétique de réflexion opaque (212) recouvre la deuxième couche diélectrique transparente (221) ; dans laquelle la troisième couche diélectrique transparente (222) recouvre la deuxième couche magnétique de réflexion opaque (212) ; dans laquelle la troisième couche magnétique de réflexion opaque (212) recouvre la troisième couche diélectrique transparente (222) ; dans laquelle la quatrième couche diélectrique transparente (221) recouvre la troisième couche magnétique de réflexion opaque (212) ; dans laquelle la quatrième couche magnétique de réflexion opaque (211) recouvre la quatrième couche diélectrique transparente (221) ; dans laquelle la cinquième couche diélectrique transparente (220) recouvre la quatrième couche magnétique de réflexion opaque (211) ; et dans laquelle la deuxième couche magnétique semi-transparente absorbante (210) recouvre la cinquième couche diélectrique transparente (220).

10. Paillette de pigment (200b, 300) selon la revendication 9, dans laquelle la deuxième et la troisième couches magnétiques de réflexion opaques (212b) ont une épaisseur physique qui est supérieure à celle de la première et de la quatrième couches magnétiques de réflexion opaques (211b) ; dans laquelle la première et la quatrième couches magnétiques de réflexion opaques(211b) ont une épaisseur physique qui est supérieure à celle de la première et de la deuxième couches magnétiques semi-transparentes absorbantes (210b) ; dans laquelle la troisième couche diélectrique transparente (222b) a une épaisseur physique qui est inférieure à celle de la première et de la cinquième couches diélectriques transparentes (220b) ; et dans laquelle la première et la cinquième couches diélectriques transparentes (220b) ont une épaisseur physique qui est inférieure à celle de la deuxième et de la quatrième couches diélectriques transparentes (221b) .

11. Composition de revêtement magnétique (330) comprenant un milieu liant (350) et la paillette de pigment (100, 200, 300) selon l'une quelconque des revendications 1 à 10 placée dans le milieu liant (350).

12. Composition de revêtement (330) selon la revendication 11, dans laquelle le milieu liant (350) est un milieu liant de grande viscosité (350), et dans laquelle la composition de revêtement (330) est une encre en taille douce.
